# EUROPEAN PATENT APPLICATION

(11) **EP 3 698 946 A1**
(43) Date of publication of application: **26.08.2020**
(21) Application number: 18868465.8
(22) Date of filing: 18.10.2018
(51) Int. Cl.: B29C 64/223, B29C 64/188, B29C 64/141, B33Y 10/00, B33Y 30/00, B33Y 40/00

(54) **PRINTER DEVICE USING ACOUSTIC LEVITATION**

(30) Priority: 20.10.2017 KR 20170136603
(71) Applicant: Ewha University-Industry Collaboration Foundation, Seoul 03760 (KR)
(72) Inventor: RHEE, Jin Kyu, Seoul 06547 (KR)
(74) Representative: Mewburn Ellis LLP
(86) International application number: PCT/KR2018/012342
(87) International publication number: WO 2019/078639

(57) **Abstract**

Provided is a printing apparatus using acoustic levitation, the printing apparatus including an acoustic levitation unit, which includes at least one acoustic wave generator and is configured to generate an acoustic field to levitate at least one printing material and form print layers having specific patterns; a material supply unit configured to supply the printing material; and a placing unit including a plate, wherein the print layers are sequentially stacked on the plate.

## Description

### TECHNICAL FIELD

The present disclosure relates to a printing apparatus using acoustic levitation.

### BACKGROUND ART

3D printer technology is technology capable of fabricating complex structures in a short time by stacking layers corresponding to drawings made using computer-aided design (CAD) without cutting. Recently, beyond prototyping, this technology is being actively utilized in industries such as medical, automotive, ships, and footwear.

3D printers include a stereolithography apparatus (SLA) method using the principle in which, when a laser beam is irradiated to a photo-curing resin, a scanned portion is cured, a selective laser sintering (SLS) method using the principle in which, instead of a photo-curing resin, a functional polymer or metal powder is used in the SLA and is sintered and molded by irradiating a laser beam thereto, a fused deposition modeling (FDM) method, and a digital light processing (DLP) method using the principle in which light is irradiated to the lower portion of a reservoir in which a photo-curing resin is stored to partially cure the photo-curing resin.

With the development of such 3D printer technologies, the importance of technologies for improving the precision of an output is increasing.

### DESCRIPTION OF EMBODIMENTS

### TECHNICAL PROBLEM

The present disclosure provides a printing apparatus for printing a target object by using acoustic levitation.

### SOLUTION TO PROBLEM

The present disclosure provides a printing apparatus using acoustic levitation, the printing apparatus including an acoustic levitation unit, which includes at least one acoustic wave generator and is configured to generate an acoustic field to levitate at least one printing material and form print layers having specific patterns; a material supply unit configured to supply the printing material; and a placing unit, which includes a plate, wherein the print layers are sequentially stacked on the plate.

### ADVANTAGEOUS EFFECTS OF DISCLOSURE

A printing apparatus using acoustic levitation according to embodiments of the present disclosure may form a printing material in a specific pattern while the printing material is being levitated by using acoustic waves. Therefore, the printing material may be precisely controlled, and thus a precise printing may be performed. Particularly, in a printing apparatus using acoustic levitation according to embodiments of the present disclosure, sensitive printing materials having viscoelasticity may be formed in specific patterns without physical contact, and thus a target object may be printed by using various materials.

### BRIEF DESCRIPTION OF THE DRAWINGS

FIG. 1 is a schematic view of a printing apparatus using acoustic levitation according to an embodiment of the present disclosure.
FIG. 2 is a partial cross-sectional view of the printing apparatus using the acoustic levitation of FIG. 1.
FIG. 3 is a block diagram showing the printing apparatus using the acoustic levitation of FIG. 1.
FIG. 4 is a schematic view of a portion of a printing apparatus using acoustic levitation according to another embodiment of the present disclosure.

### BEST MODE

According to an aspect of the present disclosure, a printing apparatus using acoustic levitation, the printing apparatus includes an acoustic levitation unit, which includes at least one acoustic wave generator and is configured to generate an acoustic field to levitate at least one printing material and form print layers having specific patterns; a material supply unit configured to supply the printing material; and a placing unit, which includes a plate, wherein the print layers are sequentially stacked on the plate.

According to an embodiment of the present disclosure, the printing apparatus may further include a photo-curing unit configured to cure the print layers stacked on the plate by irradiating light toward a path in which the plate moves.

According to an embodiment of the present disclosure, the printing apparatus may further include a control unit configured to generate pattern information of the print layers according to a stacking order by using shape information regarding a target object to be fabricated and thickness information of the printing material and control the acoustic levitation unit to generate the acoustic field in correspondence to the pattern information.

According to an embodiment of the present disclosure, when the placing unit approaches within a pre-set distance or closer to the acoustic levitation unit, the control unit may drop the print layer by controlling the acoustic levitation unit.

According to an embodiment of the present disclosure, the printing apparatus may further include a vertical driving unit configured to move the plate up and down.

According to an embodiment of the present disclosure, the material supply unit may be provided adjacent to the acoustic levitation unit to supply the printing material toward the acoustic field.

According to an embodiment of the present disclosure, the material supply unit may be connected to the acoustic levitation unit and supplies the printing material to the acoustic levitation unit, and the acoustic levitation unit may simultaneously generate the acoustic field and supplies the printing material to the acoustic field.

According to another aspect of the present disclosure, a printing apparatus using acoustic levitation, the printing apparatus includes an acoustic levitation unit, which includes one or more acoustic wave generators and a planar driving unit configured to move the acoustic wave generators in at least one of a first direction and a second direction crossing the first direction and is configured to generate an acoustic field to levitate one or more printing materials; a placing unit including a plate on which the printing material is placed; and a control unit configured to control the acoustic levitation unit, such that the printing material is placed on the plate in correspondence to shape information regarding a target object to be fabricated.

According to an embodiment of the present disclosure, the control unit may generate pattern information of print layers according to a stacking order by using shape information regarding the target object to be fabricated and thickness information of the printing material and control the acoustic levitation unit to generate the acoustic field in correspondence to the pattern information or to move the acoustic wave generators.

According to an embodiment of the present disclosure, the printing apparatus may further include a material supply unit provided adjacent to the acoustic levitation unit and configured to supply the printing material toward the acoustic field.

According to an embodiment of the present disclosure, the printing apparatus may further include a material supply unit connected to the acoustic levitation unit to supply the printing material to the acoustic levitation unit, wherein the acoustic levitation unit may simultaneously generate the acoustic field and supply the printing material to the acoustic field.

According to an embodiment of the present disclosure, the printing apparatus may further include a photo-curing unit configured to cure the printing material stacked on the plate by irradiating light toward a path in which the plate moves.

According to an embodiment of the present disclosure, the printing apparatus may further include a vertical driving unit configured to move the plate up and down.

Other aspects, features, and advantages will become apparent from the following drawings, claims, and detailed description of the present disclosure.

### MODE OF DISCLOSURE

The present disclosure may include various embodiments and modifications, and embodiments thereof will be illustrated in the drawings and will be described herein in detail. The effects and features of the present disclosure and the accompanying methods thereof will become apparent from the following description of the embodiments, taken in conjunction with the accompanying drawings. However, the present disclosure is not limited to the embodiments described below, and may be embodied in various modes.

Reference will now be made in detail to embodiments, examples of which are illustrated in the accompanying drawings. In the drawings, the same elements are denoted by the same reference numerals, and a repeated explanation thereof will not be given.

It will be understood that although the terms "first", "second", etc. may be used herein to describe various elements, these elements should not be limited by these terms. These elements are only used to distinguish one element from another.

As used herein, the singular forms "a," "an" and "the" are intended to include the plural forms as well, unless the context clearly indicates otherwise.

It will be further understood that the terms "comprises" and/or "comprising" used herein specify the presence of stated features or components, but do not preclude the presence or addition of one or more other features or components.

It will be understood that when a layer, region, or component is referred to as being "formed on" another layer, region, or component, it can be directly or indirectly formed on the other layer, region, or component. That is, for example, intervening layers, regions, or components may be present.

Sizes of elements in the drawings may be exaggerated for convenience of explanation. In other words, since sizes and thicknesses of components in the drawings are arbitrarily illustrated for convenience of explanation, the following embodiments are not limited thereto.

When a certain embodiment may be implemented differently, a specific process order may be performed differently from the described order. For example, two consecutively described processes may be performed substantially at the same time or performed in an order opposite to the described order.

In the specification, when a film, region, or component is connected to another film, region, or component, the films, regions, or components may not only be directly connected, but may also be indirectly connected via an intervening film, region, or component therebetween. For example, when a film, region, component is electrically connected to another film, region, or component, the films, regions, or components may not only be directly electrically connected, but may also be indirectly electrically connected via an intervening film, region, or component therebetween.

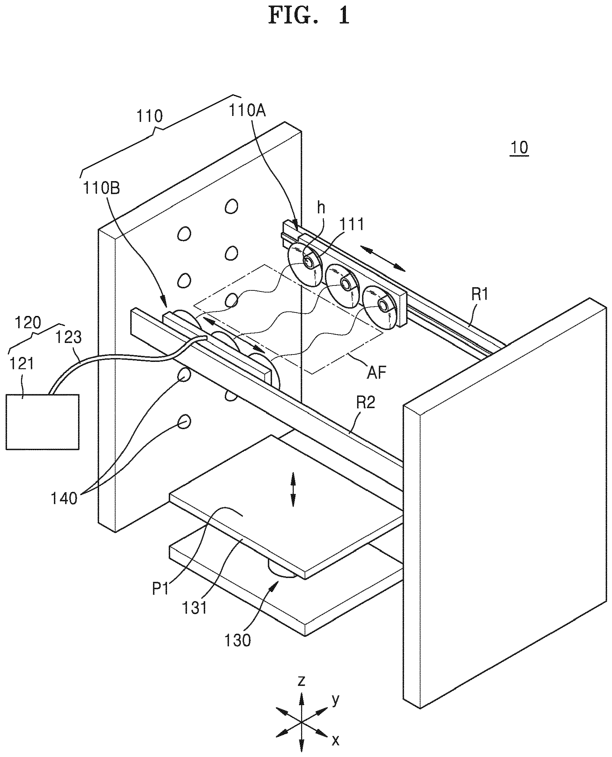

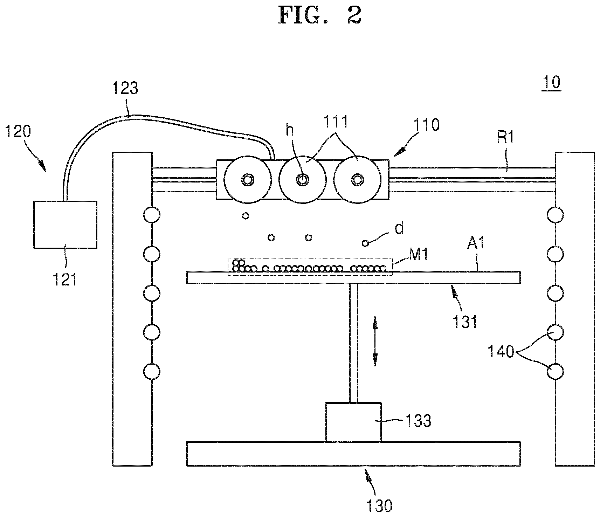

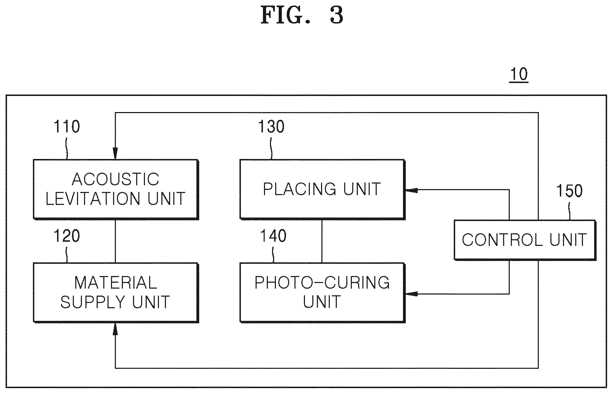

FIG. 1 is a schematic view of a printing apparatus 10 using acoustic levitation according to an embodiment of the present disclosure, FIG. 2 is a partial cross-sectional view of the printing apparatus 10 using acoustic levitation of FIG. 1, and FIG. 3 is a block diagram of the printing apparatus 10 using acoustic levitation of FIG. 1.

Referring to FIGS. 1 to 3, the printing apparatus 10 using acoustic levitation according to an embodiment of the present disclosure may include an acoustic levitation unit 110, a material supply unit 120, a placing unit 130, a photo-curing unit 140, and a control unit 150.

The acoustic levitation unit 110 includes one or more acoustic wave generators 111 and may create an acoustic field AF to levitate one or more printing materials d. The acoustic levitation unit 110 may include a planar driving unit (not shown) that moves the acoustic wave generator 111 in at least one of a first direction (y direction) and a second direction (x direction) crossing the first direction (y direction).

For example, the acoustic levitation unit 110 may include rails R1 and R2 that guide the acoustic wave generator 111 in the first direction (y direction), and the planar driving unit (not shown) may move the acoustic wave generator 111 along the rails R1 and R2. Therefore, the acoustic levitation unit 110 may scan along the x-y plane by moving while the printing material d is being levitated, and thus a print layer having a particular pattern may be formed and placed on the placing unit 130 described below.

Levitation using acoustic waves is a technique for levitating a material in a medium by using the radiation pressure of acoustic waves in high-density acoustic waves in the medium. The acoustic levitation unit 110 may include a first acoustic levitation unit 110A and a second acoustic levitation unit 110B that are arranged to face each other. The first acoustic levitation unit 110A and the second acoustic levitation unit 110B may each include one or more acoustic wave generators 111. Here, the acoustic wave generator 111 is a unit for generating acoustic waves and may be, for example, an ultrasonic transducer.

The first acoustic levitation unit 110A and the second acoustic levitation unit 110B include a plurality of acoustic wave generators 111 arranged at constant intervals as illustrated, and, by adjusting the emission intensity of acoustic waves from the acoustic wave generators 111, may generate an acoustic field AF for levitating a printing material. The acoustic field AF generates radiation pressure, which is a pressure that levitates an object as acoustic waves generated by the plurality of acoustic wave generators 111 cross one another. The acoustic levitation unit 110 may control the emission intensity of acoustic waves generated by the plurality of acoustic wave generators 111 and generate the acoustic field AF, thereby forming printing materials d in a particular pattern while the printing materials d are being levitated.

The material supply unit 120 may supply the printing material d. In one embodiment, the material supply unit 120 may be provided adjacent to the acoustic levitation unit 110 and supply the printing material d toward the acoustic field AF. At this time, in one embodiment, the printing material d may include a photo-curing material including an acrylic group. The printing apparatus 10 using acoustic levitation according to an embodiment of the present disclosure may perform a printing process by photo-curing the printing material d that is levitated and patterned. However, the present disclosure is not necessarily limited thereto. In another embodiment, the printing material d may be cured by using heat or the printing material d may be cured by using both methods.

Meanwhile, the printing material d may include a polymer material having viscoelasticity. Polymer materials constituting a polymer solution may include at least one selected from a group including polypropylene, polyethylene, polystyrene, polyethylene oxide, polyethylene terephthalate, polybutylene terephthalate, polyethylene naphthalate, poly-m-phenylene terephthalate, poly-p-phenylene isofuratate, polyvinylidene fluoride, polyvinylidene fluoride-hexafluoropropylene copolymer, polyvinyl chloride, polyvinylidene chloride-acrylate copolymer, polyacrylonitrile, polyacrylonitrile-methacrylate copolymer, polycarbonate, polyarylate, polyester carbonate, nylon, aramid, polycaprolactone, polylactic acid, polyglycolic acid, collagen, polyhydroxybutyric acid, polyvinyl acetate, and polypeptide, but the present disclosure is not limited thereto. In another embodiment, the printing material d may include metal powders used for 3-dimensional printing.

In another embodiment, the material supply unit 120 may be connected to the acoustic levitation unit 110 and supply the printing material d to the acoustic levitation unit 110. The material supply unit 120 may include a storage unit 121 for storing the printing material d and a supply tube 123 for guiding the printing material d from the storage unit 121 to the acoustic levitation unit 110.

At this time, the acoustic levitation unit 110 may generate the acoustic field AF and supply the printing material d to the acoustic field AF simultaneously. For example, although not shown, the acoustic levitation unit 110 may include an accommodating portion for accommodating the printing material d supplied from the material supply unit 120 and a dispenser for supplying a certain amount of the printing material d from the accommodating portion to the acoustic field AF. As illustrated, a hole h may be formed at the center of the acoustic wave generator 111, and the dispenser may supply a certain amount of the printing material d to the acoustic field AF through the hole h.

The placing unit 130 includes a plate 131 located under the acoustic levitation unit 110, and the printing material d may be stacked on the plate 131. The placing unit 130 further includes a vertical driving unit 133 that moves the plate 131 up and down, and thus the plate 131 may be moved reciprocally toward the acoustic levitation unit 110. The printing material d may be levitated at a specific position by the acoustic levitation unit 110 and then placed on the plate 131. The specific position described above may be determined based on shape information of a target object to be fabricated, and a print layer M1 corresponding to the shape information of the target object may be formed on the plate 131.

Meanwhile, the placing unit 130 may further include a heat supply unit (not shown) for supplying heat to the printing material d stacked on the plate 131. In an embodiment of the present disclosure, in case of printing by using a heat-curable printing material d, the printing material d may be stacked on the plate 131 and cured simultaneously by supplying heat to the printing material d through the heat supply unit (not shown).

On the other hand, in the case of using a printing material d including a photo-curing material, the printing apparatus 10 using acoustic levitation according to an embodiment of the present disclosure may include the photo-curing unit 140. The photo-curing unit 140 may cure the printing material d placed on the plate 131 or the above-described print layer M1 by irradiating light toward a path in which the plate 131 moves. The photo-curing unit 140 may include, for example, one or more UV lamps. The UV lamps may be, as illustrated, arranged at a constant interval on a path in which the plate 131 moves up and down.

The control unit 150 may store shape information of a target object to be fabricated. The shape information of the target object to be fabricated may be provided by using an external device, such as a laser scanning device. The control unit 150 may control the acoustic levitation unit 110, such that the printing material d is placed on the plate 131 of the placing unit 130 in correspondence to the shape information of the target object to be fabricated.

In detail, the control unit 150 may generate pattern information of the print layer M1 according to a stacking order by using information regarding the thickness of the printing material d known in advance and the shape information. The control unit 150 divides the target object into a plurality of print layers M1 in the heightwise direction (z direction) in correspondence to the thickness of the printing material d and then generates pattern information of each print layer M1. The control unit 150 may control the acoustic levitation unit 110, such that the printing material d levitated by the acoustic levitation unit 110 may be positioned in correspondence to the above-described pattern information of the print layers M1. In other words, the control unit 150 may control the acoustic levitation unit 110 to generate the acoustic field AF corresponding to the pattern information or move the acoustic wave generator in the first direction (y direction) or the second direction (x direction).

Also, the control unit 150 may control the placing unit 130, such that the printing material d levitated by the acoustic levitation unit 110 may be placed on the plate 131. When one print layer M1 is formed on the plate 131 by the acoustic levitation unit 110, the control unit 150 may control the vertical driving unit 133 to move the plate 131 away from the acoustic levitation unit 110. The control unit 150 controls the photo-curing unit 140 while the plate 131 is moving, thereby curing the print layer M1 by irradiating light to the print layer M1 formed on the plate 131.

Then, the control unit 150 moves the plate 131 toward the acoustic levitation unit 110 again and controls the vertical driving unit 133, such that a new print layer M1 is placed on the cured print layer M1. The target object may be completed by repeating the above-stated operations.

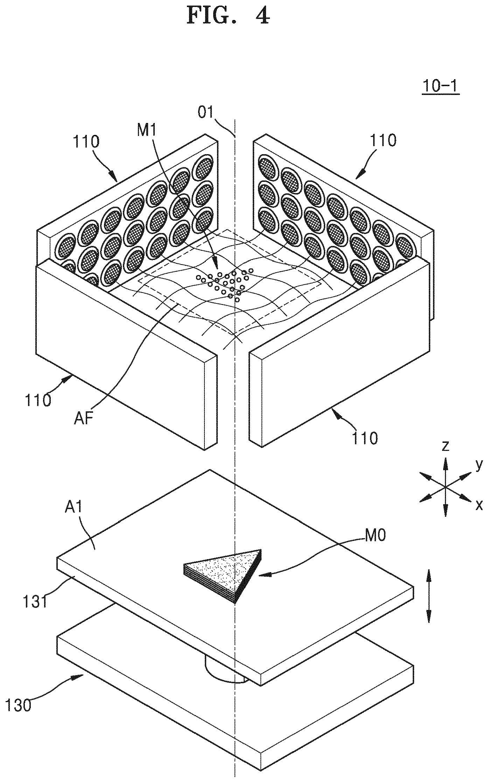

FIG. 4 is a schematic view of a portion of a printing apparatus 10-1 using acoustic levitation according to another embodiment of the present disclosure. The printing apparatus 10-1 using acoustic levitation according to another embodiment is the same as the printing apparatus 10 using acoustic levitation according to the previous embodiment, except for the acoustic levitation unit 110 and the control unit 150. Therefore, descriptions identical to those already given above will be omitted.

Referring to FIGS. 3 and 4, the printing apparatus 10-1 using acoustic levitation according to another embodiment of the present disclosure may include the acoustic levitation unit 110, the material supply unit 120, the placing unit 130, the photo-curing unit 140, and the control unit 150.

The acoustic levitation unit 110 includes one or more acoustic wave generators 111 and may generate the acoustic field AF to levitate one or more printing materials d to form the print layer M1 having a specific pattern. At this time, unlike in the previous embodiment, the acoustic levitation unit 110 according to another embodiment forms a plurality of printing materials d into one print layer and placing the print layer on the placing unit 130, instead of scanning and printing the printing material d.

The acoustic levitation unit 110 includes a plurality of acoustic wave generators 111 and, as illustrated, may be arranged to surround the printing material d. The acoustic levitation unit 110 each includes a plurality of acoustic wave generators 111 arranged at a constant interval and, by controlling the emission intensity of acoustic waves from the acoustic wave generators 111, may generate the acoustic field AF for levitating the printing material d. The acoustic levitation unit 110 according to another embodiment may form the plurality of printing materials d into the print layer M1 including a specific pattern and levitate the same through the plurality of acoustic wave generators 111 arranged therearound.

The material supply unit 120 may supply the printing material d. In one embodiment, the material supply unit 120 may be provided adjacent to the acoustic levitation unit 110 and supply a printing material (the printing material d?) toward the acoustic field AF. In another embodiment, the material supply unit 120 may be connected to the acoustic levitation unit 110 and supply the printing material d to the acoustic levitation unit 110.

The placing unit 130 includes a plate 131 located under the acoustic levitation unit 110, and the print layer M1 may be stacked on the plate 131. The print layers M1 may be sequentially stacked to form a target object M0 to be fabricated. The placing unit 130 further includes a vertical driving unit 133 that moves the plate 131 up and down, and thus the plate 131 may be moved reciprocally toward the acoustic levitation unit 110.

The control unit 150 may generate pattern information of the print layer M1 according to a stacking order by using shape information of the target object M0 to be fabricated and information regarding the thickness of the printing material d. The control unit 150 may control the acoustic levitation unit 110 to generate the acoustic field AF in correspondence to the pattern information.

At this time, the control unit 150 may drop the print layer M1 by controlling the acoustic levitation unit 110 when the placing unit 130 approaches within a pre-set distance or closer to the acoustic levitation unit 110. In other words, the printing apparatus 10-1 using acoustic levitation according to another embodiment of the present disclosure may generate the acoustic field AF to form the print layers M1 having specific patterns and sequentially dropping and placing the print layers M1 on the placing unit 130, thereby completing the target object M0.

When the print layer M1, which is levitated by the acoustic levitation unit 110, is dropped and placed on the plate 131, the control unit 150 may control the vertical driving unit 133 to move the plate 131 away from the acoustic levitation unit 110. The control unit 150 controls the photo-curing unit 140 while the plate 131 is moving, thereby curing the print layer M1 by irradiating light to the print layer M1 formed on the plate 131. The control unit 150 may complete the target object M0 by repeating the above-stated operations.

As described above, a printing apparatus using acoustic levitation according to embodiments of the present disclosure may form a printing material in a specific pattern while the printing material is being levitated by using acoustic waves. Therefore, the printing material may be precisely controlled, and thus a precise printing may be performed. Particularly, in a printing apparatus using acoustic levitation according to embodiments of the present disclosure, sensitive printing materials having viscoelasticity may be formed in specific patterns without physical contact, and thus a target object may be printed by using various materials.

While the present disclosure has been described with reference to exemplary embodiments, it is to be understood that the present disclosure is not limited to the disclosed example embodiments, but, on the contrary, is intended to cover various modifications and equivalent arrangements included within the spirit and scope of the appended claims. Accordingly, the true scope of protection of the present disclosure should be determined by the technical idea of the appended claims.

### INDUSTRIAL APPLICABILITY

According to an embodiment of the present disclosure, a printing apparatus using acoustic levitation effect is provided. Also, embodiments of the present disclosure may be applied to industrial 3D printing apparatuses.

## Claims

1. A printing apparatus using acoustic levitation, the printing apparatus comprising:
an acoustic levitation unit, which comprises at least one acoustic wave generator and is configured to generate an acoustic field to levitate at least one printing material and form print layers having specific patterns;
a material supply unit configured to supply the printing material; and
a placing unit comprising a plate, wherein the print layers are sequentially stacked on the plate.

2. The printing apparatus of claim 1, further comprising a photo-curing unit configured to cure the print layers stacked on the plate by irradiating light toward a path in which the plate moves.

3. The printing apparatus of claim 1, further comprising a control unit configured to generate pattern information of the print layers according to a stacking order by using shape information regarding an object to be fabricated and thickness information of the printing material, and to control the acoustic levitation unit to generate the acoustic field in correspondence with the pattern information.

4. The printing apparatus of claim 3, wherein, when the placing unit approaches the acoustic levitation unit at a pre-set distance or less, the control unit drops the print layer by controlling the acoustic levitation unit.

5. The printing apparatus of claim 1, further comprising a vertical driving unit configured to move the plate up and down.

6. The printing apparatus of claim 1, wherein the material supply unit is provided adjacent to the acoustic levitation unit to supply the printing material toward the acoustic field.

7. The printing apparatus of claim 1, wherein
the material supply unit is connected to the acoustic levitation unit and supplies the printing material to the acoustic levitation unit, and
the acoustic levitation unit simultaneously generates the acoustic field and supplies the printing material to the acoustic field.

8. A printing apparatus using acoustic levitation, the printing apparatus comprising:
an acoustic levitation unit, which comprises one or more acoustic wave generators and a planar driving unit configured to move the acoustic wave generators in at least one of a first direction and a second direction crossing the first direction, and is configured to generate an acoustic field to levitate one or more printing materials;
a placing unit comprising a plate on which the printing material is placed; and
a control unit configured to control the acoustic levitation unit such that the printing material is placed on the plate in correspondence with shape information regarding an object to be fabricated.

9. The printing apparatus of claim 8, wherein the control unit generates pattern information of print layers according to a stacking order by using shape information regarding the object to be fabricated and thickness information of the printing material, and controls the acoustic levitation unit to generate the acoustic field in correspondence with the pattern information or to move the acoustic wave generators.

10. The printing apparatus of claim 8, further comprising a material supply unit provided adjacent to the acoustic levitation unit and configured to supply the printing material toward the acoustic field.

11. The printing apparatus of claim 8, further comprising a material supply unit connected to the acoustic levitation unit to supply the printing material to the acoustic levitation unit,
wherein the acoustic levitation unit simultaneously generates the acoustic field and supplies the printing material to the acoustic field.

12. The printing apparatus of claim 8, further comprising a photo-curing unit configured to cure the printing material stacked on the plate by irradiating light toward a path in which the plate moves.

13. The printing apparatus of claim 8, further comprising a vertical driving unit configured to move the plate up and down.
